Europäisches Patentamt

European Patent Office

Office européen des brevets

(19)

(11) Veröffentlichungsnummer : **0 126 874**
**B1**

(12) **EUROPÄISCHE PATENTSCHRIFT**

(45) Veröffentlichungstag der Patentschrift :
30.07.86

(21) Anmeldenummer : 84103024.0

(22) Anmeldetag : 20.03.84

(51) Int. Cl.⁴ : **B 60 T 17/08**, B 60 T 13/24,
F 16 D 65/32, F 15 B 15/10

(54) Druckluftzylinder, insbesondere Druckluftbremszylinder für Kraftfahrzeuge.

(30) Priorität : 27.04.83 DE 3315174

(43) Veröffentlichungstag der Anmeldung :
05.12.84 Patentblatt 84/49

(45) Bekanntmachung des Hinweises auf die Patenterteilung : 30.07.86 Patentblatt 86/31

(84) Benannte Vertragsstaaten :
DE FR IT NL SE

(56) Entgegenhaltungen :
DE-A- 2 904 805
DE-B- 1 035 496
DE-C-    58 926
DE-C- 1 000 245
FR-A- 2 160 222

(73) Patentinhaber : KNORR-BREMSE AG
Moosacher Strasse 80 Postfach 401060
D-8000 München 40 (DE)

(72) Erfinder : Nell, Kuno
Herzog-Stephan-Weg 20
D-8011 Zorneding (DE)

Jouve, 18, rue St-Denis, 75001 Paris, France

EP 0 126 874 B1

**Beschreibung**

Die Erfindung bezieht sich auf einen Druckluftzylinder, insbesondere Druckluftbremszylinder für Kraftfahrzeugbremsanlagen, mit einem eine druckluftbeaufschlagbare Arbeitskammer gegen eine über eine Entlüftungseinrichtung zur Atmosphäre entlüftbare Außendruckkammer abgrenzenden Kolben und mit einem den Kolben überbrückenden Verbindungskanal zwischen Arbeits- und Außendruckkammer, dessen Durchgang von einem Differenzdruckventil überwacht ist, das einen verschieblichen, in Schließrichtung vom Arbeitskammerdruck entgegen einer Federkraft und dem Druck in der Außendruckkammer belasteten Ventilkörper aufweist.

Ein derartiger Druckluftzylinder ist aus der DE-C-29 04 805 bekannt. Nach dieser Druckschrift befindet sich im Kolben eine zur Arbeitskammer hin offene Ausnehmung, in welcher axial verschieblich ein etwa topfartiger Ventilkörper geführt ist; zwischen der Wandung der Ausnehmung und dem Außenumfang des Ventilkörpers befinden sich dabei Luftführungskanäle. Nahe seines der Arbeitskammer abgewandten Endes trägt der Ventilkörper an seinem Außenumfang einen O-Ring, der sich dicht gegen den Boden der Ausnehmung anzulegen vermag. Radial innerhalb des Dichtringes geht von der Ausnehmung ein Luftführungskanal zur Außendruckkammer ab. In den Ventilkörper und einen erweiterten Mündungsabschnitt des Luftführungskanals greift eine Feder ein, welche den Ventilkörper in Verschieberichtung zur Arbeitskammer belastet. Die Außenluftkammer des bekannten Druckluftzylinders steht über ein einen geringen Öffnungsdruck benötigendes Rückschlagventil mit der Atmosphäre in Verbindung. Der bekannte Druckluftzylinder weist also als Dichtung für sein Differenzdruckventil lediglich einen an der Stirnfläche des Ventilkörpers gehaltenen O-Ring auf; bei nicht auszuschließender Lageänderung des O-Ringes relativ zum Ventilkörper oder bei Verschmutzung oder Verformung des O-Ringes kann das Differenzdruckventil nicht mehr dicht schließen, wodurch die Funktionssicherheit des Druckluftzylinders gefährdet ist.

Es ist Aufgabe der Erfindung, einen Druckluftzylinder der eingangs genannten Art zu schaffen, bei welchem die Dichtigkeit des Differenzdruckventils im geschlossenen Zustand mit sehr großer Sicherheit gewährleistet ist, das Differenzdruckventil also nicht zum Ausfall des Druckluftzylinders führen kann. Zugleich soll die Möglichkeit gegeben werden, das Differenzdruckventil in einfacher Weise und derart auszubilden, daß es bereits bei sehr geringen Differenzdrücken den Durchgang von der Arbeits- zur Außendruckkammer zu verschließen vermag.

Diese Aufgabe wird nach der Erfindung dadurch gelöst, daß das Differenzdruckventil zwei in Strömungsrichtung gesehen in Serie zueinander angeordnete, ringförmige Dichtstellen unterschiedlichen Durchmessers aufweist.

Weitere vorteilhafte Ausgestaltungen des Druckluftzylinders nach der Erfindung sind, in den Unteransprüchen gekennzeichnet.

In der Zeichnung sind Ausführungsbeispiele für nach der Erfindung ausgebildete Druckluftzylinder dargestellt und zwar zeigt:

Figur 1 ein erstes Ausführungsbeispiel,

Figur 2 und 3 eine Einzelheit aus Fig. 1 in vergrößertem Maßstab in unterschiedlichen Stellungen,

Figur 4 ein zweites Ausführungsbeispiel und

Figur 5 und 6 eine Einzelheit aus Fig. 4 in vergrößertem Maßstab in unterschiedlichen Stellungen.

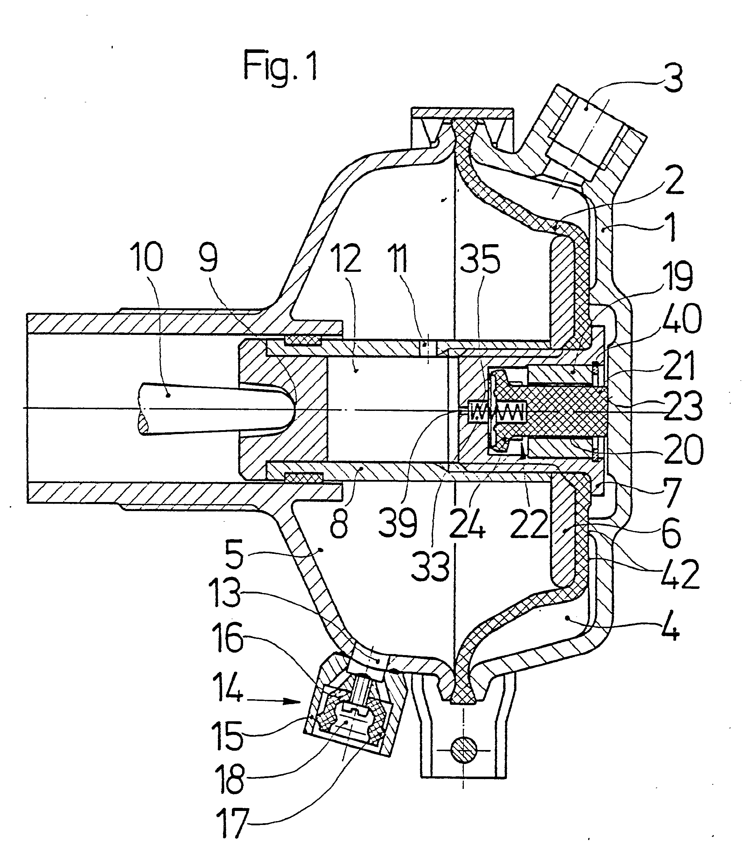

Gemäß Fig. 1 befindet sich in einem Gehäuse 1 eines insbesondere als Druckluftbremszlinder für Kraftfahrzeugbremsanlagen einsetzbaren Druckluftzylinders ein als Membrankolben ausgebildeter Kolben 2, welcher eine über einen Rohranschluß 3 mit Druckluft beaufschlagbare Arbeitskammer 4 von einer Außendruckkammer 5 abtrennt. Der Kolben 2 mit Membranteller 6 weist ein Schraubteil 7 auf, das ihn mit einem verschieblich im Gehäuse geführten Kolbenrohr 8 verbindet. Eine kugelpfannenförmige Ausnehmung 9 am dem Kolben 2 abgewandten Ende des Kolbenrohres 8 dient der Aufnahme des abgerundeten Endes einer nur teilweise dargestellten Kolbenstange 10. Eine Querbohrung 11 im Kolbenrohr 8 verbindet dessen Innenraum 12 mit der Außendruckkammer 5. Im Bereich der Außendruckkammer 5 weist das Gehäuse 1 an dessen Unterseite eine Durchbrechung 13 auf, an welche sich außen eine Entlüftungseinrichtung 14 anschließt, die ein mit dem Gehäuse 1 verbundenes Gehäuse 15 und einem in diesem gehaltenen Gummikörpers 16 umfaßt; der Gummikörper 16 liegt mit einer Dichtlippe 17 an der Wandung des an die Durchbrechung 13 anschließenden, zur Atmosphäre hin offenen Innenraumes 18 des Gehäuses 15 derart an, daß die Dichtlippe 17 bei bereits sehr niedrigem Überdruck in der Außendruckkammer 5 von der Wandung abgehoben wird und einen Strömungsweg von der Außendruckkammer 5 durch die Durchbrechung 13 und den Innenraum 18 zur freien Atmosphäre freigibt.

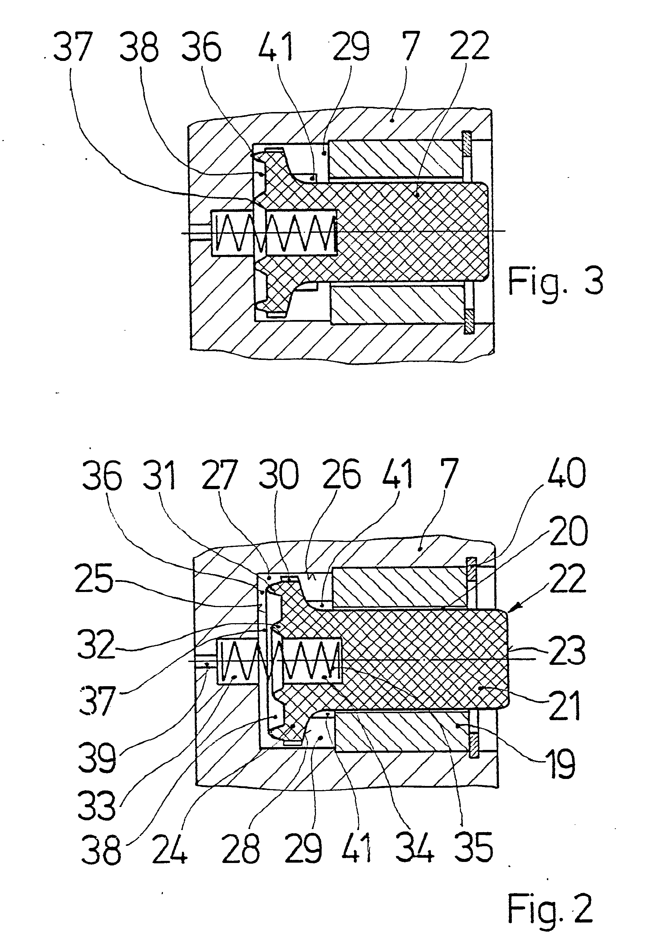

Das Schraubteil 7 ist etwa topfartig mit zur Arbeitskammer 4 weisender Öffnung ausgebildet. Im Schraubteil/befindet sich ein Führungsring 19, in welchem unter Bildung eines Ringspaltes 20 der Schaft 21 eines im wesentlichen pilzförmigen Ventilkörpers 22 axial verschieblich geführt ist. Die Stirnfläche 23 des Schaftes 21 befindet sich dabei in der Arbeitskammer 4 und andererseits endet der Ventilkörper 22 mit einem besonders deutlich aus Fig. 2 ersichtlichen Kopf 24. Der Kopf 24 ist aus elastisch verformbaren Material gefertigt und befindet sich in einer von der ebenen Bodenfläche 25 sowie der zylindrischen Innenwandung 26 des Schraubteiles 7 begrenzten Kammer 27, wobei zwischen der schaftseitigen Fläche 28 des Kopfes 24 und der Stirnfläche des Führungsringes 19 ein Stauraum 29 gebildet wird. An seinem Außenumfang ist der Kopf 24 mit Längsnuten 30 versehen, so daß er umströmbar in der Kammer 27 geführt ist. Seitens der Bodenfläche 25 trägt der Kopf 24 einen ringförmigen, radial äußeren Vorsprung 31 und einen ebenfalls ringförmigen, radial inneren Vorsprung 32, wobei der radial äußere Vorsprung 31 eine größere, axiale Höhe aufweist als der radial innere Vorsprung 32. Radial innerhalb des radial inneren Vorsprunges 32 greift in Ausnehmungen 33 bzw. 34 des Schraubteiles 7 bzw. des Ventilkörpers 22 eine Druckfeder 35 ein, welche den Ventilkörper 22 von der Bodenfläche 25 abspreizt, derart, daß die Stirnflächen der mit der Bodenfläche 25 zwei ringförmige Dichtstellen 36 bzw. 37 unterschiedlichen Durchmessers bildenden Vorsprünge 31 und 32 der Bodenfläche 25 mit geringem Abstand gegenüberstehen. Der Ringraum zwischen den beiden Vorsprüngen 31 und 32 bildet einen Zwischenraum 38 sehr geringen Volumens. Die Ausnehmung 33 ist durch eine Bohrung 39 mit dem Innenraum 12 des Kolbenrohres 8 verbunden. Der Führungsring 19 ist einerseits durch eine Stufe in der Innenwandung 26 und andererseits durch einen Sicherungsring 40 in seiner Lage im Schraubteil 7 gehalten. Im Stauraum 29 am Übergang vom Schaft 21 zum Kopf 24 weist der Ventilkörper 22 Anschläge 41 auf, welche durch Anlage an der Stirnseite des Führungsringes 19 die Lage des Ventilkörpers 22 bei von der Bodenfläche 25 abgehobenen Vorsprüngen 31 und 32 begrenzen.

In der Ruhestellung des Druckluftzylinders bei druckloser Arbeitskammer 4 liegt der Kolben 2 beispielsweise unter der Kraft einer nicht dargestellten, äußeren Rückdruckfeder an Anschlagrippen 42 des Gehäuses 1 an. Bei geöffneten Dichtstellen 36 und 37 liegt der Ventilkörper 21 unter der Kraft der Feder 25 mit seinen Anschlägen 41 am Führungsring 19 und gegebenenfalls auch mit seiner Stirnfläche 23 am Gehäuse 1 an. Alle Teile des Druckluftzylinders befinden sich in den aus Fig. 1 und Fig. 2 ersichtlichen Lagen.

Wird zum Betätigen des Druckluftzylinders die Arbeitskammer 4 druckbeaufschlagt, so wirkt diese Druckbeaufschlagung auf die Stirnfläche 23, wodurch auf den Ventilkörper 22 eine gemäß Fig. 1 nach links gerichtete Kraft ausgeübt wird. Zugleich strömt Luft durch den Ringspalt 20 in den Stauraum 29 ein, in welchem sich die Luftströmung beruhigt und infolge dessen der Druck rasch ansteigt. Etwas Luft strömt weiter durch die Längsnut 30 und durch die geöffneten Dichtstellen 36 und 37 sowie durch die Bohrung 39 zum Innenraum 12 und zur Außendruckkammer 5. Der Druckanstieg im Stauraum 29 beaufschlagt die Fläche 28 ebenfalls in Verschieberichtung für den Ventilkörper 22 nach links, so daß sich der Ventilkörper 22 alsbald nach links verschiebt und mit seinem Vorsprung 31 zur Anlage an der Bodenfläche 25 gelangt, wodurch die Dichtstelle 36 des Differenzdruckventils geschlossen wird und die Luftabströmung aus dem Stauraum 29 zur Außendruckkammer 5 unterbricht. Der Zwischenraum 38 und die Ausnehmungen 33 und 34 entleeren sich zur Außendruckkammer 5, so daß am Ventilkörper 22 die jeweils maximal mögliche Druckdifferenz in Verschieberichtung nach links angreift. Es ist wesentlich, daß der Ventilkörper 22 mit seiner Stirnfläche 23 eine unmittelbar dem Druckaufbau der Arbeitskammer 4 ausgesetzte Kolbenfläche aufweist, daß die durch den Ringspalt 20 strömende Luft den Ventilkörper 22 ebenfalls nach links mitzunehmen versucht und daß infolge der Luftberuhigung im Stauraum 29 durch Umsetzen der Strömungs- in Druckenergie ein rascher, ebenfalls linksgerichtet auf den Ventilkörper 22 einwirkender Druckaufbau erfolgt ; der Ventilkörper 22 wird also sehr rasch nach links verschoben und die Dichtstelle 36 dementsprechend rasch geschlossen, so daß sehr schnell nach Beginn eines Druckaufbaues in der Arbeitskammer 4 die Luftabströmung zur Außendruckkammer 5 unterbrochen wird.

Im weiteren Verlauf des Druckaufbaues in der Arbeitskammer 4 wird der Ventilkörper 22 verstärkt nach links gedrückt, so daß sich der Kopf 24 elastisch verformt und auch die Dichtstelle 32 zur Anlage an der Bodenfläche 25 gelangt und damit die Dichtstelle 37 schließt. Das Differenzdruckventil befindet sich damit in der aus Fig. 3 ersichtlichen Schaltstellung, in welcher der den Kolben 2 überbrückende, aus dem Ringspalt 20, der Längsnut 30, den Zwischenraum 38, der Ausnehmung 33 und der Bohrung 39 gebildete Verbindungskanal zwischen Arbeits- und Außendruckkammer 4 und 5 doppelt unterbrochen ist. Während dieser Vorgänge oder auch anschließend hieran wird der Kolben 2 unter der Druckbeaufschlagung der Arbeitskammer 4 gemäß Fig. 1 nach links bewegt, wobei er über das Kolbenrohr 8 die Kolbenstange 10 mitnimmt. Bei dieser Hubbewegung wird vom Kolben 2 Luft aus der Außenluftkammer 5 verdrängt, welche durch die Durchbrechung 13 und an der vom Gehäuse 15 abklappenden Dichtlippe 17 vorbei zur Atmosphäre abströmt.

Beim nachfolgenden Druckabbau in der Arbeitskammer 4 wird der Kolben 2 durch äußere Kräfte, beispielsweise die nicht dargestellte Rückdruckfeder, nach rechts bewegt. Durch die Rückhaltewirkung der am Gehäuse 15 anliegenden Dichtlippe kann dabei in der Außendruckkammer ein geringer Unterdruck entstehen, welcher jedoch die Kolbenrückbewegung nicht behindert. Wesentlich ist, daß der geringe Druck in der Außendruckkammer 5 nur die vom kleineren Vorsprung 32 umschlossene Fläche des Ventilkörpers 22 beaufschlagt und damit eine nur geringe, nach links gerichtete Sogwirkung auf letzteren ausübt. Kurz vor Erreichen des Atmosphärendruckes in der Arbeitskammer 4 vermag daher die Druckfeder 35 den Ventilkörper 22 nach rechts zu verschieben, wobei sich zuerst der Vorsprung 32 von der Bodenfläche 25 unter Öffnen der Dichtstelle 37 und nachfolgend, bei anhaltender Bewegung des Ventilkörpers 22, auch der Vorsprung 31 unter Öffnen der Dichtstelle 36 von der Bodenfläche 25 abhebt. Die Druckfeder 35 kann also zum Öffnen der beiden Dichtstellen 36 und 37 relativ schwach sein, wodurch sie zu Beginn einer Druckbeaufschlagung der Arbeitskammer 4 der Schließbewegung des Ventilkörpers 22 für insbesondere die äußere Dichtstelle 36 auch nur einen sehr geringen Widerstand entgegenstellt.

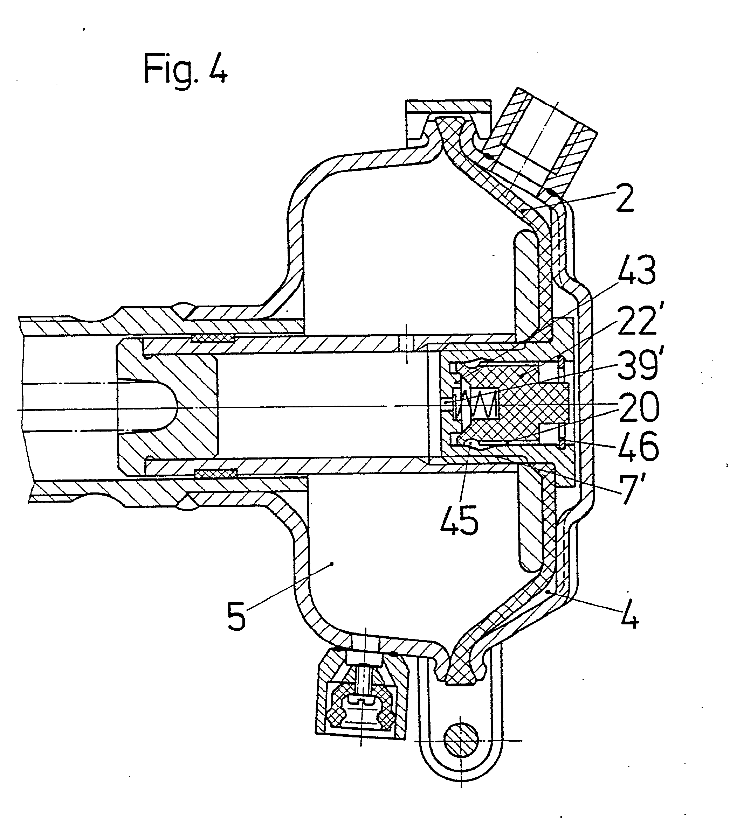

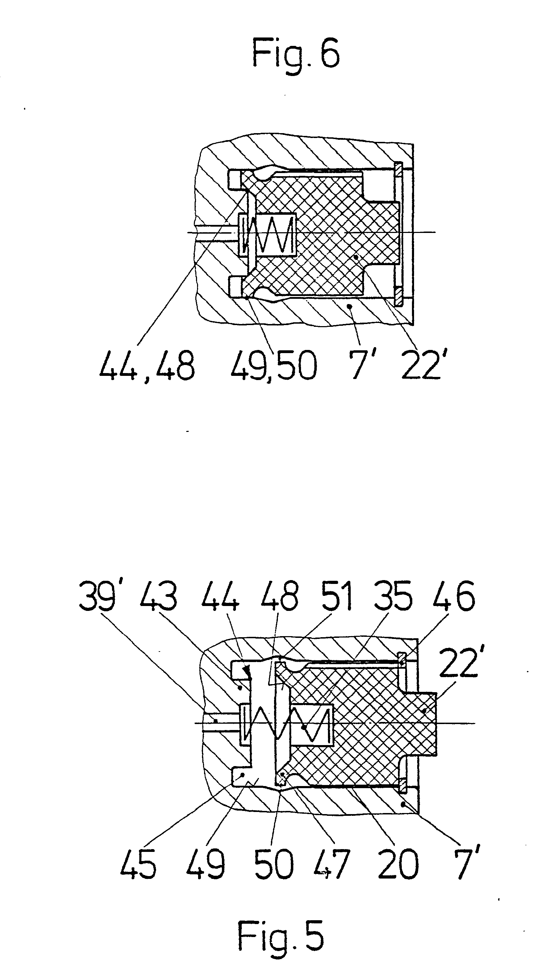

Bei der Ausführungsform des Druckluftzylinders nach Fig. 4 und 5 weist das Schraubteil 7' an seiner Bodenseite einen in seinen Innenraum vorspringenden Ringwulst 43 auf, dessen Außenkante eine Dichtkante 44 bildet. Die Bohrung 39' mündet innerhalb des Ringwulstes 43 in den Innenraum 45 des Schraubteiles 7'. Im Schraubteil 7' ist der Ventilkörper 22' unter Bildung des Ringspaltes 20 axial verschieblich geführt, an einem Austreten aus dem Schraubteil 7' ist der Ventilkörper 22' durch einen Sicherungsring 46 gehindert. Der Ventilkörper 22' endet abgewandt zur Arbeitskammer 4 mit einem Ringabschnitt 47 aus elastischem Werkstoff, der mit einer sich konisch erweiternden Kegelfläche 48 den Ringwulst 43 bis zum Aufliegen der Kegelfläche 48 auf der Dichtkante 44 zu übergreifen vermag ; die Kegelfläche 48 bildet also zusammen mit der Dichtkante 44 ein Kegelventil 44, 48 als erste Dichtstelle des Differenzdruckventils. Der Ringabschnitt 47 endet dicht vor der zylindrischen Innenwandung 49 des Innenraumes 45 mit einer dieser zugewandten, ringförmigen Dichtfläche 50, die Innenwandung 49 bildet zusammen mit der Dichtfläche 50 die zweite Dichtstelle 49, 50 des Differenzdruckventils. Gegenüberliegend zu der Stelle, an welcher sich im Ruhezustand, bei am Sicherungsring 46 anliegenden Ventilkörper 22', die Dichtfläche 50 befindet, weist der Innenraum 45 an der Innenwandung 49 eine flache, umlaufende Erweiterung 51 auf. Der übrige Aufbau des Druckluftzylinders entspricht demjenigen nach Fig. 1.

Im Ruhezustand bei druckloser Arbeitskammer 4 nehmen die Teile des Differenzdruckventils die aus Fig. 5 ersichtlichen Ruhelagen ein, in welcher der Ventilkörper 22' durch die Druckfeder 35 in seine durch Anlage am Sicherungsring 46 bestimmte, rechte Endstellung gedrückt wird. Die Arbeitskammer 4 steht dabei durch den Ringspalt 20, die Erweiterung 51, den Innenraum 45 und die Bohrung 39' mit der Ausdruckkammer 5 in Verbindung. Der Kolben 2 befindet sich in seiner rechten Endstellung.

Zu Beginn einer Druckbeaufschlagung der Arbeitskammer 4 wird durch die rechtsseitige Druckbeaufschlagung des Ventilkörpers 22' sowie die durch den Ringspalt 20 strömende Luft der Ventilkörper 22' entgegen der Kraft der Druckfeder 35 gemäß Fig. 5 nach links verschoben, wobei sich die Kegelfläche 48 auf die Dichtkante auflegt und somit das Kegelventil 44, 48 geschlossen wird. Bei geringer Weiterbewegung des Ventilkörpers 22 weitet die Dichtkante 44 über die auf sie aufgleitende Kegelfläche 48 den Ringabschnitt 47 elastisch auf, wobei die Dichtfläche 50 an die Innenwandung 49 angelegt und angepreßt wird, also die Dichtstelle 49, 50 geschlossen wird. Damit ist der in Fig. 6 dargestellte Schaltzustand erreicht, in welchem beide Dichtstellen des Differenzdruckventils geschlossen sind. Es kann also keine Luft aus der Arbeitskammer 4 mehr zur Außendruckkammer 5 überströmen. Während dieser Vorgänge oder nachfolgend zu diesen wird durch die Druckbeaufschlagung der Arbeitskammer 4 der Kolben 2 gemäß Fig. 4 nach links verschoben.

Bei nachfolgender Druckentlastung der Arbeitskammer 4 spielen sich entsprechend umgekehrte Vorgänge ab, bis der Ausgangszustand nach Fig. 4 wieder erreicht ist. Dabei gleitet die Kegelfläche 48 unter der elastischen Eigenspannung des Ringabschnittes 47 von der Dichtkante 44 unter Verschiebung des Ventilkörpers 22' gemäß Fig. 6 nach rechts ab, wodurch sich die Dichtfläche 20 in ihrem Durchmesser verkleinert und von der Innenwandung 49 abheben kann, die zweite Dichtstelle 49, 50 öffnet sich also. Sodann drückt die Druckfeder 35 den Ventilkörper 22' weiter nach rechts, wodurch dieser unter Öffnen des Kegelventils 44, 48 in seine in Fig. 5 dargestellte Lage gelangt. Damit ist auch die zweite Dichtstelle geöffnet.

Sollte beim Druckluftzylinder nach Fig. 1 oder Fig. 4 eine der Dichtstellen des Differenzdruckventils durch irgendwelche Umstände, beispielsweise Eindringen eines Fremdkörpers oder geringfügige Beschädigung des Ventilkörpers 22, 22' oder der mit ihm zusammenwirkenden Flächen des Schraubteiles 7, 7' undicht werden, so vermag doch noch die andere Dichtstelle dicht zu schließen und eine Verbindung der Arbeitskammer 4 mit der Außendruckkammer 5 sicher zu unterbinden. Der Druckluftzylinder bleibt also in diesem Fall voll funktionsfähig, was besonders wichtig bei Verwendung des Druckluftzylinders als Druckluftbremszylinder in Kraftfahrzeugbremsanlagen ist. Andererseits werden aber sämtliche durch die regelmäßige Luftdurchspülung der Außenluftkammer 5 mit aus der Arbeitskammer 4 stammender Luft erzielbaren Vorteile, wie gute Sauber- und Trockenhaltung, damit keine Korrision im Druckluftzylinder-Inneren, keine Eisbildung und kein Ansammeln von die Lebensdauer des Kolbens 2 beeinträchtigenden Fremdkörpern, wie beispielsweise Sand, in der Außenluftkammer 5 voll erreicht.

Es ist selbstverständlich, daß anstelle des in den Ausführungsbeispielen dargestellten Membrankolbens auch ein fester Kolben mit an seinem Umfang befindlicher Manschettendichtung im Druckluftzylinder Verwendung finden kann.

Die Ventilkörper 22 und 22' sind vorzugsweise aus Kunststoff gefertigt. Um Verklemmungen in ihren Führungen sicher zu vermeiden, kann es zweckmäßig sein, sie in ihren Führungspartien mit einer metallischen Hülse zu versehen. Insbesondere kann der Schaft 21 des Ventilkörpers 22 im Bereich seiner Führung im Führungsring 19 an seinem Außenumfang eine derartige, metallische Hülse aufweisen.

Selbstverständlich ist es weiterhin möglich, anstelle des Entlüftungsventils 14 eine beliebige, andersartige Entlüftungseinrichtung zum Verbinden der Außendruckkammer mit der Atmosphäre vorzusehen.

Bezugszeichenliste

1 Gehäuse
2 Kolben
3 Rohranschluß
4 Arbeitskammer
5 Außendruckkammer
6 Membranteller
7, 7' Schraubteil
8 Kolbenrohr
9 Ausnehmung
10 Kolbenstange
11 Querbohrung
12 Innenraum
13 Durchbrechung
14 Entlüftungseinrichtung
15 Gehäuse
16 Gummikörper
17 Dichtlippe
18 Innenraum
19 Führungsring
20 Ringspalt
21 Schaft
22, 22' Ventilkörper
23 Stirnfläche
24 Kopf
25 Bodenfläche
26 Innenwandung
27 Kammer
28 Fläche
29 Stauraum
30 Längsnut
31 Vorsprung
32 Vorsprung
33 Ausnehmung
34 Ausnehmung
35 Druckfeder
36 Dichtstelle
37 Dichtstelle
38 Zwischenraum
39, 39' Bohrung
40 Sicherungsring
41 Anschlag
42 Anschlagrippe
43 Ringwulst
44 Dichtkante
45 Innenraum
46 Sicherungsring
47 Ringabschnitt
48 Kegelfläche
44, 48 Kegelventil
49 Innenwandung
50 Dichtfläche
49, 50 Dichtstelle
51 Erweiterung

## Patentansprüche

1. Druckluftzylinder, insbesondere Druckluftbremszylinder für Kraftfahrzeugbremsanlagen, mit einem eine druckluftbeaufschlagbare Arbeitskammer (4) gegen eine über eine Entlüftungseinrichtung (14) zur Atmosphäre entlüftbare Außendruckkammer (5) abgrenzenden Kolben (2) und mit einem den Kolben überbrückenden Verbindungskanal (39, 39') zwischen Arbeits- und Außendruckkammer, dessen Durchgang von einem Differenzdruckventil überwacht ist, das einen verschieblichen, in Schließrichtung vom Arbeitskammerdruck entgegen einer Federkraft (35) und dem Druck in der Außendruckkammer belasteten Ventilkörper (22, 22') aufweist, dadurch gekennzeichnet, daß das Differenzdruckventil zwei in Strömungsrichtung gesehen in Serie zueinander angeordnete, ringförmige Dichtstellen (36 und 37 bzw. 49, 50 und 44, 48) unterschiedlichen Durchmessers aufweist.

2. Druckluftzylinder nach Anspruch 1, dadurch gekennzeichnet, daß sich zwischen den beiden Dichtstellen (36, 37) ein Zwischenraum (38) mit bezogen auf die Volumen der Arbeits- und Außendruckkammer (4, 5) sehr kleinem Volumen befindet.

3. Druckluftzylinder nach Anspruch 1 oder 2, dadurch gekennzeichnet, daß die zwei Dichstellen (36 und 37 bzw. 49, 50 und 44, 48) während Schließ- bzw. Öffnungsvorgängen nach einander in bzw. außer Eingriff gelangen.

4. Druckluftzylinder nach Anspruch 2 oder 3, dadurch gekennzeichnet, daß das Differenzdruckventil einen Stauraum (29) aufweist, der aus der Arbeitskammer (4) über eine Strömungsdrossel (Ringspalt 20) füllbar ist und der stromauf der Dichtstelle (36, 37) angeordnet ist und dessen Druck eine Fläche (28) des Ventilkörpers (22) in Schließrichtung des Differenzdruckventils belastet.

5. Druckluftzylinder nach Anspruch 4, dadurch gekennzeichnet, daß der im wesentlichen pilzförmige Ventilkörper (22) einen unter Bildung eines als Strömungsdrossel wirkenden Ringspaltes (20) axial verschieblich im Kolben (2) gelagerten Schaft (21) aufweist, dessen Stirnfläche (23) sich in der Arbeitskammer (4) befindet, und daß der einen größeren Durchmesser als der Schaft aufweisende Kopf (24) des Ventilkörpers an seinem Außenumfang umströmbar (Längsnut 30) in einer mit dem Kolben beweglichen Kammer (27) axial verschieblich ist, wobei an den Kopf arbeitskammerseitig der Stauraum (29) und außenkammerseitig der ringartige Zwischenraum (38) anschließen.

6. Druckluftzylinder nach Anspruch 5, dadurch gekennzeichnet, daß der Kopf (24) seitens des Zwischenraumes (38) zwei ringartige, zueinander konzentrische Vorsprünge (31, 32) unterschiedlichen Durchmessers trägt, die zwischen sich den Zwischenraum einschließen und die zusammen mit einer ihnen gegenüberstehenden, kolbenfesten Wandung (Bodenfläche 25) die Dichtstellen (36, 37) bilden.

7. Druckluftzylinder nach Anspruch 6, dadurch gekennzeichnet, daß der Kopf (24) aus elastisch verformbarem Material besteht, daß die kolbenfeste Wandung (Bodenfläche 25) eben ist und daß im Ruhezustand die Stirnfläche des radial äußeren Vorsprunges (31), bezogen auf die Stirnfläche des radial inneren Vorsprunges (32), zur Wand (Bodenfläche 25) hin axial versetzt angeordnet ist.

8. Druckluftzylinder nach Anspruch 7, dadurch gekennzeichnet, daß radial innerhalb des radial inneren Vorsprunges (32) die kolbenfeste Wand (Bodenfläche 25) und/oder der Kopf (24) eine Ausnehmung (33, 34) aufweisen, die mit der Außendruckkammer (5) in Verbindung steht und in welcher sich eine den Ventilkörper (22) in Entfernungsrichtung von der Wand belastende Feder (Druckfeder 35) befindet.

9. Druckluftzylinder nach Anspruch 3, dadurch gekennzeichnet, daß der in einer Ausnehmung (Innenraum 45) des Kolbens (2) axial verschieblich geführte Ventilkörper (22') außendruckkammerseitig mit einem radial elastisch aufweitbaren Ringabschnitt (47) endet, dessen Innenwandung (Kegelfläche 48) mit einem kolbenfesten Ventilsitz (Dichtkante 44) ein Kegelventil (44, 48) bildet, wobei aus der Schließkraft des Kegelventils eine in Aufweitrichtung des Ringabschnittes wirkende Kraftkomponente resultiert und sich am freien Ende des Ringabschnittes eine radial nach außen gerichtete, ringförmige Dichtfläche (50) befindet, welche beim Aufweiten des Ringabschnittes in dichten Eingriff mit einer zylindrischen Innenwand (49) der Ausnehmung gelangt.

10. Druckluftzylinder nach Anspruch 9, dadurch gekennzeichnet, daß die einen im wesentlichen zylindrischen Querschnitt aufweisende Ausnehmung (45) einerseits offen in die Arbeitskammer (4) mündet, daß der Ventilkörper (22') unter Bildung eines als Strömungsdrossel wirkenden Ringspaltes (20) in der Ausnehmung geführt ist, und daß die Ausnehmung radial innerhalb des Ventilssitzes (Dichtkante 44) eine Öffnung (Bohrung 39') zur Außendruckkammer (5) aufweist.

**Claims**

1. Compressed air cylinder, particularly a compressed air brake cylinder for automotive brake systems, comprising a piston (2) shutting off an air-loadable working chamber (4) from an external pressure chamber (5) which can be vented to atmosphere via a venting device (14), and comprising a connecting bore (39, 39') bypassing the piston between working chamber and external pressure chamber, the passage in the said bore being monitored by a differential pressure valve which has a movable valve body (22, 22') loaded in the closing direction by the working chamber pressure against a spring force (35) and the pressure in the external pressure chamber, wherein the differential pressure valve has, viewing in the direction of flow, two series-connected, ring-shaped sealing points (36 and 37 or 49, 50 and 44, 48) of different diameter.

2. Compressed air cylinder as defined in Claim 1, wherein there is between the two sealing points (36, 37) a space (38) of very small volume relative to the volume of the working chamber and external pressure chamber (4, 5).

3. Compressed air cylinder as defined in Claim 1 or 2, wherein the two sealing points (36 and 37 or 49, 50 and 44, 48) are successively engaged and disengaged during the closing and opening processes, respectively.

4. Compressed air cylinder as defined in Claim 2 or 3, wherein the differential pressure valve has a baffle compartment (29) which can be filled from the working chamber (4) via a choke (annular gap 20) and which is positioned upstream of the sealing point (36, 37) and whose pressure loads a surface (28) of the valve body (22) in the closing direction of the differential pressure valve.

5. Compressed air cylinder as defined in Claim 4, wherein the essentially mushroom-shaped valve body (22) has a stem (21) which is mounted in axially movable fashion in the piston (2) so as to form an annular gap (20) acting as a choke, and whose end face (23) is positioned in the working chamber (4), and wherein the valve body head (24), which is of larger diameter than the stem, is axially movable in a chamber (27) moving with the piston so as to be bypassable at its outer circumference (longitudinal groove 30), the baffle compartment (29) being adjacent to the head at the working chamber side and the ring-like space (38) adjacent to it at the external chamber side.

6. Compressed air cylinder as defined in Claim 5, wherein at the same side as the space (38), the head (24) bears two ring-like, concentric protuberances (31, 32) of different diameter, which enclose the space between them and which form the sealing points (36, 37) together with an opposite wall (bottom surface 25) fixed to the piston.

7. Compressed air cylinder as defined in Claim 6, wherein the head (24) consists of elastically deformable material, wherein the wall fixed to the piston (bottom surface 25) is level and wherein, in the neutral condition, the end face of the radially outer protuberance (31) is axially offset from the wall (bottom surface 25) relative to the end face of the radially inner protuberance (32).

8. Compressed air cylinder as defined in Claim 7, wherein, at a radial location within the radially inner protuberance (32), the fixed piston wall (bottom surface 25) and/or the head (24) have a recess (33, 34) which communicates with the external pressure chamber (5) and which contains a spring (compression spring 35) loading the valve body (22) in the direction away from the wall.

9. Compressed air cylinder as defined in Claim 3, wherein the valve body (22'), which is axially movable in a recess (inner compartment 45) of the piston (2), ends at the external pressure chamber side in a radially elastically expandable ring section (47) whose inner wall (taper surface 48) forms a cone valve (44, 48) with a valve seat fixed to the piston (sealing edge 44), the closing force of the cone valve producing a force component acting in the expanding direction of the ring section and a radially outward-directed, ring-shaped sealing surface (50) being located at the free end of the ring section, which sealing surface (50) enters into tight engagement with a cylindrical inner wall (49) of the recess when the ring section expands.

10. Compressed air cylinder as defined in Claim 9, wherein the recess (45), which has an essentially cylindrical cross-section, opens at one side into the working chamber (4), wherein the valve body (22') is guided in the recess while forming an annular gap (20) acting as a choke, and wherein the recess has, at a radial location within the valve seat (sealing edge 44), an opening (bore 39') to the external pressure chamber (5).

**Revendications**

1. Cylindre à air comprimé, en particulier cylindre de frein à air comprimé pour des installations de freinage pour véhicules automobiles, du type comportant un piston (2) séparant une chambre de travail (4) susceptible d'être chargée en air comprimé d'une chambre à pression extérieure (5) susceptible d'être reliée à l'atmosphère, ainsi qu'un canal de liaison (39, 39') qui ponte le piston, qui est établi entre la chambre de travail et la chambre à pression extérieure, et dont le passage est contrôlé par une soupape à pression différentielle qui est pourvue d'un corps de soupape (22, 22') mobile, chargé dans le sens de la fermeture par la pression qui règne dans la chambre de travail, à l'encontre de la force d'un ressort (35) et de la pression qui règne dans la chambre à pression extérieure, caractérisé par le fait que la soupape à pression différentielle comporte deux emplacements d'étanchéité annulaires (36 et 37 ou 49, 50 et 44, 48) de diamètres différents et disposés en série dans la direction de l'écoulement.

2. Cylindre à air comprimé selon la revendication 1, caractérisé par le fait qu'entre les deux emplacements d'étanchéité (36, 37) est prévu un espace intermédiaire (38) ayant un volume très faible par rapport aux volumes de la chambre de travail et de la chambre à pression extérieure (4, 5).

3. Cylindre à air comprimé selon la revendication 1 ou 2, caractérisé par le fait que les deux emplacements d'étanchéité (36 et 37 ou 49, 50 et 44, 48) viennent, pendant les opérations de fermeture ou d'ouverture, successivement en prise ou sont hors de prise.

4. Cylindre à air comprimé selon la revendication 2 ou 3, caractérisé par le fait que la soupape à pression différentielle comporte une chambre d'accumulation (29) qui est susceptible d'être alimentée par la chambre de travail (4), par l'intermédiaire d'un étranglement de l'écoulement (fente annulaire 20), ladite chambre d'accumulation étant disposée en amont de l'emplacement d'étanchéité (36, 37) et sa pression charge une surface (28) du corps de soupape (22) dans le sens de la fermeture de la soupape à pression différentielle.

5. Cylindre à air comprimé selon la revendication 4, caractérisé par le fait que le corps de soupape (22) qui possède pour l'essentiel la forme d'un champignon possède une tige (21) mobile axialement dans le piston, avec formation d'une fente annulaire (20) agissant comme un étranglement de l'écoulement, la face frontale (23) de cette tige se situant dans la chambre de travail (4), et que la tête (24) du corps de soupape, qui a un diamètre plus grand que celui de la tige, tout en pouvant être balayée sur la périphérie extérieure (gorge longitudinale 30), est susceptible d'être déplacée axialement dans une chambre (27) mobile avec le piston.

6. Cylindre à air comprimé selon la revendication 5, caractérisé par le fait que la tête (24) porte, du côté de la chambre intermédiaire (38), deux parties saillantes (31, 32), annulaires, concentriques entre elles et de diamètres différents, lesdites parties saillantes déterminant entre elles la chambre intermédiaire et formant avec une paroi (surface de fond 25) qui est solidaire du piston et leur fait face, les emplacements d'étanchéité (36, 37).

7. Cylindre à air comprimé selon la revendication 6, caractérisé par le fait que la tête (24) est constituée avec un matériau élastiquement déformable, que la paroi (surface de fond 25) qui est solidaire du piston est plane, et qu'à l'état de repos, la surface frontale de la partie saillante radialement extérieure (31) est décalée axialement vers la paroi (surface de fond 25), par rapport à la surface frontale de la partie saillante radialement intérieure (32).

8. Cylindre à air comprimé selon la revendication 7, caractérisé par le fait que radialement dans la partie saillante radialement intérieure (32), la paroi (surface de fond 25) solidaire du piston et/ou de la tête (24) présentent un perçage (33, 34) qui communique avec la chambre à pression extérieure (5) et dans lequel se trouve un ressort (ressort de pression 35) qui charge le corps de soupape (22) dans le sens d'éloignement de la paroi.

9. Cylindre à air comprimé selon la revendication 3, caractérisé en ce que le corps de soupape (22') qui est guidé axialement dans une cavité (chambre intérieure 45) ménagée dans le piston (2), se termine du côté de la chambre à pression extérieure par une section annulaire (47) s'élargissant élastiquement dans le sens radial, et dont la paroi intérieure (surface conique 48) forme, avec un siège de soupape (bord d'étanchéité 44) solidaire du piston, une soupape conique (44, 48), la réalisation étant telle que la force de fermeture de la soupape conique donne naissance à une composante agissant dans le sens de l'élargissement de la section annulaire, alors qu'à l'extrémité libre de la section annulaire est prévue une surface d'étanchéité annulaire (50) dirigée radialement vers l'intérieur, laquelle surface d'étanchéité (50) vient porter de façon étanche contre une paroi intérieure cylindrique (49), de la cavité, lors de l'élargissement de la section annulaire.

10. Cylindre à air comprimé selon la revendication 9, caractérisé par le fait que la cavité (45) qui possède une section transversale sensiblement cylindrique, débouche d'une part librement dans la chambre de travail (4), que le corps de soupape (22') est guidé dans la cavité, avec formation d'une fente annulaire (20) agissant comme étranglement de l'écoulement, et que la cavité possède, radialement à l'intérieur du siège de soupape (bord d'étanchéité 44), une ouverture (perçage 39') menant dans la chambre à pression extérieure (5).

# Fig. 1

0 126 874

Fig. 3

Fig. 2

2

## Fig. 4

# Fig. 6

44,48   49,50   7'   22'

39'  43  44  48  51  35  46

22'

45   49   50   47   20   7'

# Fig. 5